# EUROPÄISCHE PATENTSCHRIFT

(11) **EP 3 940 272 B1**
(45) Veröffentlichungstag und Bekanntmachung des Hinweises auf die Patenterteilung: **14.02.2024**
(21) Anmeldenummer: 21184927.8
(22) Anmeldetag: 11.07.2021
(51) Int. Cl.: F16K 5/06, F16K 27/06, F16K 5/04

(54) **ABSPERRHAHN, INSBESONDERE FÜR EINEN EINSATZ IM SANITÄRBEREICH**
SHUT-OFF VALVE IN PARTICULAR FOR USE IN SANITARY FACILITIES
ROBINET D'ARRÊT, PARTICULIÈREMENT POUR UNE UTILISATION DANS LE DOMAINE SANITAIRE

(30) Priorität: 14.07.2020 DE 102020118513
(43) Veröffentlichungstag der Anmeldung: 19.01.2022
(73) Patentinhaber: HENCO Industries NV, 2200 Herentals (BE)
(72) Erfinder: Lenaerts, Wouter, 2490 Balen (BE); Schuermans, Gert, 2243 Pulle (BE)
(74) Vertreter: Gosdin, Carstensen & Partner Patentanwälte Partnerschaftgesellschaft mbB

(56) Entgegenhaltungen:
- WO-A1-2015/014506
- WO-A1-2015/105555
- CN-A- 110 131 446
- DE-T5-112018 005 694
- US-A- 4 257 575
- US-A- 5 165 658

## Beschreibung

Die Erfindung betrifft einen Absperrhahn, insbesondere für einen Einsatz im Sanitärbereich, umfassend ein einstückiges Gehäuse aus einem Kunststoffmaterial, welches einen Innenbereich und Kanäle definiert, die jeweils einer Leitung von Fluid dienen und in dem Innenbereich des Gehäuses münden, wobei ein Sperrkörper aus einem Kunststoffmaterial vorgesehen ist, welcher in dem Innenbereich des Gehäuses aufgenommen und relativ zu dem Gehäuse zwischen einer Öffnungsstellung und einer Schließstellung verdrehbar ist, wobei eine Durchgangsöffnung im Sperrkörper in der Öffnungsstellung mit den Kanälen des Gehäuses überdeckt und hierdurch eine Verbindung zwischen den Kanälen herstellt, und wobei Dichtelemente aus einem Kunststoffmaterial vorgesehen sind, die jeweils mit je einem Durchgang ausgestattet sind und dabei jeweils mit dem zugehörigen Durchgang fluchtend mit jeweils einem der Kanäle platziert sind. Des Weiteren betrifft die Erfindung einen Verteiler mit mindestens einem vorgenannten Absperrhahn.

Im Sanitärbereich sind Absperrhähne bekannt, über welche ein Strömen von Fluid gezielt unterbrochen werden kann. Häufig sind diese Absperrhähne dabei als Kugelhähne ausgebildet, bei welchen das Strömen von Fluid zwischen Kanälen über einen Sperrkörper in Form einer Kugel in Abhängigkeit von deren Position gesteuert werden kann. Zu diesem Zweck kann die Kugel üblicherweise relativ zu einem umliegenden Gehäuse zwischen einer Öffnungsstellung und einer Schließstellung verdreht werden. Häufig ist ein Absperrhahn dabei ganz oder teilweise aus Metall hergestellt, wobei in zunehmendem Maße auch Absperrhähne Anwendung finden, welche vollständig aus Kunststoff hergestellt sind.

So geht aus der DE 10 2007 024 624 A1 ein Absperrhahn hervor, welcher als Kugelhahn ausgebildet ist. Dabei umfasst dieser Absperrhahn einen Sperrkörper in Form einer Kugel, die als Verbundbauteil aus Kunststoff hergestellt ist und eine Durchgangsöffnung definiert. Die Ventilkugel ist in einer Tragstruktur drehbar gelagert, welche sich aus zwei Tragringen und einem Verbindungselement zusammensetzt, das die beiden Tragringen miteinander verbindet. Die Tragstruktur ist von einem Gehäuse umgeben, welches ebenfalls aus Kunststoff besteht und durch Umspritzen der Tragstruktur einstückig hergestellt worden ist. Zudem ist die Ventilkugel fest mit einer Stellachse verbunden, über welche die Ventilkugel relativ zu der Tragstruktur und damit auch dem Gehäuse zwischen einer Öffnungsstellung und einer Schließstellung verdreht werden kann. In der Öffnungsstellung gelangt die Durchgangsöffnung dabei in Überdeckung mit Kanälen, welche durch das Gehäuse und auch die Tragringe der Tragstruktur definiert sind. Dadurch wird in der Öffnungsstellung ein Strömen von Fluid zwischen den Kanälen ermöglicht, indem die Durchgangsöffnung die Kanäle miteinander verbindet. In den Tragringen sind außerdem ringförmige Dichtelemente vorgesehen, welche jeweils über Dichtlippen mit der Ventilkugel in Kontakt stehen und dadurch jeweils für eine Abdichtung eines Spalts sorgen, der zwischen der Ventilkugel und dem jeweiligen Tragring vorhanden ist.

Des Weiteren offenbart auch die US 4 257 575 A einen Absperrhahn in Form eines Kugelhahnes, bei welchem ein Sperrkörper in Form einer Kugel unmittelbar in einem einstückigen Gehäuse verdrehbar gelagert ist. Das Gehäuse ist dabei aus einem Kunststoff durch Umspritzen des ebenfalls aus einem Kunststoff gefertigten Sperrkörpers gebildet worden. Im Bereich von Kanälen nimmt das Gehäuse ferner Dichtelemente auf.

Ausgehend vom vorstehend beschriebenen Stand der Technik ist es nun die Aufgabe der vorliegenden Erfindung, einen Absperrhahn zu schaffen, welcher sich durch einen niedrigen Herstellungsaufwand auszeichnet und bei dem ferner ein zuverlässiger Verbleib von Dichtelementen im Bereich von je zugehörigen Kanälen des Absperrhahnes sichergestellt ist.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Verteiler, welche mindestens ein erfindungsgemäßes Absperrhahn aufweist, ist ferner Gegenstand von Anspruch 10.

Gemäß der Erfindung umfasst ein Absperrhahn ein einstückiges Gehäuse aus einem Kunststoffmaterial, welches einen Innenbereich und Kanäle definiert, die jeweils einer Leitung von Fluid dienen und in dem Innenbereich des Gehäuses münden. Des Weiteren ist ein Sperrkörper aus einem Kunststoffmaterial vorgesehen, welcher in dem Innenbereich des Gehäuses aufgenommen ist und relativ zu dem Gehäuse zwischen einer Öffnungsstellung und einer Schließstellung verdreht werden kann. Dabei überdeckt eine Durchgangsöffnung im Sperrkörper in der Öffnungsstellung mit den Kanälen des Gehäuses und stellt dadurch eine Verbindung zwischen den Kanälen her. Außerdem sind Dichtelemente aus einem Kunststoffmaterial vorgesehen, die jeweils mit je einem Durchgang ausgestattet sind und dabei jeweils mit dem zugehörigen Durchgang fluchtend mit jeweils einem der Kanäle platziert sind.

Bei dem erfindungsgemäßen Absperrhahn sind also die Komponenten Gehäuse, Sperrkörper und Dichtelemente jeweils aus einem Kunststoffmaterial hergestellt, wobei der Absperrhahn bevorzugt komplett aus Kunststoff besteht und dementsprechend als vollsynthetischer Absperrhahn realisiert ist. Dies hat zur Folge, dass sich der erfindungsgemäße Absperrhahn durch ein niedriges Gewicht auszeichnet und zudem problemlos Materialien verwendet werden können, welche eine hohe Widerstandsfähigkeit gegenüber dem zu leitenden Fluid aufweisen.

Der Sperrkörper ist in dem Innenbereich des Gehäuses platziert und kann relativ zu dem Gehäuse zwischen der Öffnungsstellung und der Schließstellung verdreht werden, wobei in der Öffnungsstellung die Durchgangsöffnung des Sperrkörpers in Überdeckung mit den Kanälen gelangt, die durch das einstückige Gehäuse definiert werden. Durch diese Überdeckung der Durchgangsöffnung mit den Kanälen verbindet die Durchgangsöffnung die Kanäle miteinander, so dass Fluid zwischen den Kanälen strömen kann. Hingegen ist diese Verbindung in der Schließstellung des Sperrkörpers nicht hergestellt, da in diesem Fall die Durchgangsöffnung nicht mit den Kanälen überdeckt, so dass der Sperrkörper ein Strömen von Fluid zwischen den Kanälen unterbindet.

Der Innenbereich des Gehäuses ist insbesondere durch eine Ausnehmung im Gehäuse gebildet, die bevorzugt im Wesentlichen zylindrisch ausgebildet und/oder insbesondere zu mindestens einer Seite des Gehäuses hin offen ist. Von dieser Öffnung her kann der Sperrkörper in dem Innenbereich des einstückigen Gehäuses platziert werden. Besonders bevorzugt ist die Ausnehmung durchgängig durch das Gehäuse definiert, wobei sie hierbei insbesondere gestuft ausgeführt ist. Bei einer durchgängigen Ausnehmung ist der Sperrkörper insbesondere von Seiten der einen Öffnung der Ausnehmung her in dem Innenbereich platziert und ragt auf Seiten der anderen Öffnung der Ausnehmung aus dem Gehäuse hervor, wobei der Sperrkörper über ein Sicherungselement, bevorzugt einen Sprengring, gegen ein Auswandern in Richtung der einen Öffnung der Ausnehmung am Gehäuse gesichert ist.

Das Gehäuse ist im Sinne der Erfindung insbesondere einstückig aus einem thermoplastischen Kunststoff gefertigt, bei welchem es sich weiter bevorzugt um Polyvinylidenfluorid (PVDF) oder um Polyphenylensulfon (PPSU) handelt. Auch der aus einem Kunststoffmaterial hergestellte Sperrkörper besteht bevorzugt aus einem thermoplastischen Kunststoff, welcher hierbei insbesondere als Polyphenylensulfon (PPSU) vorliegen kann. Schließlich sind auch die aus einem Kunststoffmaterial bestehenden Dichtelemente insbesondere aus einem thermoplastischen Kunststoff hergestellt, bei welchem es sich weiter bevorzugt um Polyvinylidenfluorid (PVDF) handelt.

Im Sinne der Erfindung sind die Dichtelemente jeweils mit je einem Durchgang ausgestattet, wobei das einzelne Dichtelement dabei jeweils einem der Kanäle des Gehäuses zugeordnet ist und dabei derartig zu diesem zugehörigen Kanal platziert ist, dass der jeweilige Durchgang des Dichtelements mit dem zugehörigen Kanal fluchtet. Sowohl die Kanäle in dem Gehäuse, als auch die Durchgänge der Dichtelemente sind im Rahmen der Erfindung bevorzugt mit einem kreisrunden Querschnitt ausgeführt, wobei der jeweilige Durchgang und der zugehörige Kanal dabei dann bevorzugt koaxial zueinander ausgerichtet sind. Durch die fluchtende Anordnung des jeweiligen Dichtelements mit seinem Durchgang zu dem zugehörigen Kanal wird sichergestellt, dass bei einer jeweiligen Abdichtung über das Dichtelement dennoch eine Verbindung zwischen dem jeweiligen Kanal und der Durchgangsöffnung des Sperrkörpers hergestellt werden kann, wenn der Sperrkörper in seiner Öffnungsstellung verdreht worden ist.

Die Erfindung umfasst nun die technische Lehre, dass der Sperrkörper in dem Gehäuse unmittelbar verdrehbar gelagert ist. Des Weiteren dichtet das einzelne Dichtelement jeweils die Mündung des zugehörigen Kanals in den Innenbereich gegenüber einem Spalt ab, welcher zwischen dem Gehäuse und dem Sperrkörper gebildet ist. Mit anderen Worten ist der Sperrkörper also direkt und ohne zwischenliegende Komponenten in dem umliegenden, einstückigen Gehäuses verdrehbar gelagert. Zudem sorgen die Dichtelemente sowohl in der Öffnungsstellung, als auch in der Schließstellung des Sperrkörpers jeweils für eine Abdichtung der jeweiligen Mündung des zugehörigen Kanals gegenüber einem jeweiligen Spalt, welcher zwischen dem Gehäuse und dem hierin drehbar gelagerten Sperrkörper vorhanden ist.

Somit wird die drehbare Lagerung des Sperrkörpers im Gehäuse ohne separate Trag- oder Lagerelemente verwirklicht, was die Anzahl an Bauteilen des Absperrhahns und damit auch den Herstellungsaufwand reduziert. Dadurch, dass die Dichtelemente dabei jeweils für eine Abdichtung der Mündung des jeweiligen Kanals gegenüber dem, zwangsweise zwischen Gehäuse und Sperrkörper vorhandenen Spalt sorgen, wird zudem sichergestellt, dass Fluid nur in der Öffnungsstellung des Sperrkörpers von dem einen Kanal über die Durchgangsöffnung im Sperrkörper zu dem anderen Kanal gelangen kann. In der Schließstellung des Sperrkörpers verhindern die Dichtelemente ein Entweichen von Fluid aus dem jeweiligen Kanal in den zwischen Gehäuse und Sperrkörper vorhandenen Spalt. Aufgrund der Ausführung der einzelnen Komponenten des Absperrhahns aus Kunststoff lässt sich dieser zudem mit niedrigem Gewicht realisieren. Insgesamt ist dadurch eine Fertigung eines Absperrhahns mit niedrigem Herstellungsaufwand möglich.

Erfindungsgemäß weisen die Dichtelemente jeweils je einen scheibenförmigen Dichtkörper auf, welcher mit dem jeweiligen Durchgang durchsetzt ist, wobei an dem jeweiligen Dichtkörper des einzelnen Dichtelements zudem jeweils zwei vorstehende Stege ausgebildet sind, die in Richtung des jeweils anderen Dichtelements vorstehen. Von diesen Stegen ist der eine Steg dabei mit einem vorstehenden Stift versehen, während der andere Steg eine zu dem Stift korrespondierende Ausnehmung aufweist. Einander gegenüberliegende Stege der Dichtelemente stellen jeweils paarweise eine Verbindung zwischen den Dichtelementen her, indem der vorstehende Steg des einen Dichtelements mit seinem Stift in die Aussparung des Stegs des anderen Dichtelements und umgekehrt einfasst

Eine derartige Ausgestaltung eines Absperrhahns hat dabei den Vorteil, dass der dadurch im Wesentlichen scheibenförmige Aufbau des einzelnen Dichtelements ermöglicht dadurch eine einfache Fertigung der Dichtelemente. Über die Stege wird zudem sichergestellt, dass sich die Dichtelemente aneinander abstützen können, wodurch eine Sicherung der Dichtelemente im Bereich der Mündungen der Kanäle realisiert werden kann.

Hingegen findet bei dem Absperrhahn der DE 10 2007 024 624 A1 eine Lagerung des Sperrkörpers in dem einstückigen Gehäuse über die Tragstruktur statt, die sich aus den beiden Tragringen und dem diese verbindenden Verbindungselement zusammensetzt. Aufgrund der damit höheren Anzahl an Komponenten ist der Herstellungsaufwand in diesem Fall erhöht.

Gemäß einer Ausführungsform der Erfindung ist das einzelne Dichtelement in je eine Aussparung eingelegt, die jeweils in dem Gehäuse an der Mündung des jeweiligen Kanals in den Innenbereich ausgebildet ist. In vorteilhafter Weise wird hierdurch sichergestellt, dass das einzelne Dichtelement bei der Verdrehung des Sperrkörpers gegenüber dem Gehäuse zwischen der Öffnungsstellung und der Schließstellung stets im Bereich der jeweiligen Mündung des zugehörigen Kanals verbleibt und dort für die Abdichtung gegenüber dem dort vorhandenen Spalt zwischen Gehäuse und Sperrkörper sorgt. Besonders bevorzugt kann das jeweilige Dichtelement dabei von Seiten einer der Öffnungen eingelegt werden, welche die den Innenbereich definierende Ausnehmung im Gehäuse aufweist. Dadurch wird die Montage des erfindungsgemäßen Ventils erleichtert, indem die Dichtelemente im Zuge der Platzierung des Sperrkörpers im Innenbereich in die zugehörigen Aussparungen eingelegt werden.

Es ist eine weitere Ausführungsform der Erfindung, dass der Sperrkörper zumindest abschnittsweise eine zumindest teilweise sphärische Form aufweist. Bevorzugt ist der Sperrkörper bzw. dessen Abschnitt dabei als Kugel oder als Kugelsegment realisiert, welche bzw. welches relativ zu dem umliegenden Gehäuse zwischen der Öffnungsstellung und der Schließstellung verdreht werden kann und mit der Durchgangsöffnung versehen ist, die in der Öffnungsstellung in Überdeckung mit den Kanälen des Gehäuses gelangt. Besonders bevorzugt liegt der Sperrkörper bzw. dessen Abschnitt als Kugelsegment vor, welches durch Unterbrechung einer Kugel mit Abflachungen gebildet ist, die an der Durchgangsöffnung und an Oberflächenabschnitten ausgebildet sind, welche in der Schließstellung des Sperrkörpers mit den Kanälen überdecken. Bei Gestaltung des Sperrkörpers als Kugel oder als Kugelsegment ist der erfindungsgemäße Absperrhahn nach Art eines Kugelabsperrhahns gestaltet. Besonders bevorzugt ist der Sperrkörper an einem Sperrabschnitt mit der zumindest teilweise sphärischen Form versehen.

In Weiterbildung der vorgenannten Ausführungsform weisen die Durchgänge der Dichtelemente jeweils auf Seiten des Sperrkörpers eine zu der zumindest teilweisen sphärischen Form des Sperrkörpers korrespondierende Einwölbung auf. In der Folge sind also die Dichtelemente auf einer jeweiligen, dem Sperrkörper zugewandten Seite der Durchgänge mit einer Kontur gestaltet, die der gegenüberliegenden, zumindest teilweisen sphärischen Form des Sperrkörpers nachempfunden ist. Hierdurch wird erreicht, dass das einzelne Dichtelement optimal an dem Sperrkörper anliegt und dementsprechend permanent für eine zuverlässige Abdichtung sorgt.

Gemäß einer Ausgestaltungsmöglichkeit der Erfindung bildet der Sperrkörper einen Stellabschnitt aus, über welchen eine Verdrehbewegung des Sperrkörpers zwischen der Öffnungs- und der Schließstellung eingeleitet werden kann. Eine einstückige Ausführung des Sperrkörpers mit einem, die Verdrehbewegung einleitenden Abschnitts hat dabei den Vorteil, dass somit eine potentielle Schwachstelle entfällt, welche ansonsten bei der Übertragung einer Stellbewegung auf den Sperrkörper vorhanden ist. Alternativ dazu ist es im Rahmen der Erfindung aber auch denkbar, dass ein separater Stellkörper vorgesehen ist, der mit dem Sperrkörper in Drehrichtung verbunden ist über welchen eine Verdrehbewegung auf den Sperrkörper übertragen werden kann.

In Weiterbildung der vorgenannten Ausgestaltungsmöglichkeit ist der Stellabschnitt mit mindestens einem Anschlag versehen, welcher in Drehrichtung in der Öffnungsstellung und/oder in der Schließstellung des Sperrkörpers mit je einem Endanschlag in Kontakt gelangt, welcher seitens des Gehäuses ausgebildet ist. Hierdurch wird sichergestellt, dass der Sperrkörper zuverlässig entweder in die Öffnungsstellung oder in die Schließstellung bewegt ist, indem ein Verdrehen über die jeweilige Stellung hinaus durch Kontakt des mindestens einen Anschlags mit dem jeweiligen Endanschlag unterbunden wird. Besonders bevorzugt ist der Stellabschnitt dabei zylindrisch ausgebildet, wobei an diametral gegenüberliegenden Seiten des Stellabschnitts dabei zwei Anschläge ausgebildet sind, die als nach radial außen vorstehende Erhebungen vorliegen. Jedem dieser Anschläge sind dabei seitens des Gehäuses zwei Endanschläge zugeordnet, wobei der einzelne Anschlag dabei in der Öffnungsstellung mit dem einen Endanschlag und in der Schließstellung mit dem anderen Endanschlag in Kontakt gelangt.

Es ist eine alternative oder auch ergänzenden Weiterbildung der vorgenannten Ausgestaltungsmöglichkeit, dass der Stellabschnitt mit einer umlaufenden Nut versehen ist, in welcher ein Dichtelement aufgenommen ist. Das Dichtelement liegt dabei zwischen dem Stellabschnitt und dem Gehäuse und dichtet einen Spalt zwischen dem Stellabschnitt und dem Gehäuse ab. Hierdurch wird in diesem Bereich ein Austreten von Fluid unterbunden, welches im Zuge einer Verdrehung des Sperrkörpers von der Öffnungsstellung in die Schließstellung in den Bereich zwischen Sperrkörper und Gehäuse gelangt sein kann.

Weiter alternativ oder ergänzend ist der Stellabschnitt mit einem Außenumfang an einem Innenumfang des Gehäuses geführt. Hierdurch kann auch die Führung der Sperrkörpers bei seiner Verdrehung zwischen den beiden Stellungen verbessert werden.

Gemäß einer weiteren Ausführungsform der Erfindung ist der Stellabschnitt mit einer Krafteinleitungseinrichtung verbunden, an welcher eine Kraft zur Darstellung der Verdrehbewegung einleitbar ist. Die Krafteinleitungseinrichtung dient dementsprechend der Einleitung einer Stellkraft und der Übertragung auf den Stellabschnitt. Die Krafteinleitungseinrichtung kann dabei hebelartig gestaltet sein, liegt aber bevorzugt als Drehknopf vor, der händisch oder über ein entsprechendes Werkzeug verdreht werden kann. Besonders bevorzugt sind dabei auf der Krafteinleitungseinrichtung entsprechenden Markierungen aufgebracht, welche die Öffnungsstellung und die Schließstellung und die erforderlichen Drehrichtungen nach außen hin kenntlich machen.

Entsprechend einer weiteren Ausgestaltungsmöglichkeit der Erfindung bildet der Sperrkörper einen zylindrischen Führungsabschnitt aus, welcher mit einem Außenumfang an einem Innenumfang einer Ausnehmung im Gehäuse geführt ist. Hierdurch kann eine zuverlässige Lagerung des Sperrkörpers im Gehäuse realisiert werden, indem der zylindrischen Führungsabschnitt mit seinem Außenumfang am Innenumfang der Ausnehmung des Gehäuses geführt ist. Aufgrund der einteiligen Ausbildung des Sperrkörpers mit dem Führungsabschnitt kann hierbei zudem eine ansonsten vorhandene Schwachstelle zwischen dem Sperrkörper und einem separat ausgebildeten Führungsabschnitt eliminiert werden. Bei der Ausnehmung handelt es sich dabei um die den Innenbereich zur Aufnahme des Sperrkörpers definierenden Ausnehmung, welche dabei das Gehäuse als durchgehende Ausnehmung bevorzugt vollständig durchdringt.

In Weiterbildung der vorgenannten Ausführungsform ist der zylindrischen Führungsabschnitt mit einer umlaufenden Nut versehen, in welche ein Dichtungselement eingelegt ist, bei welchem es sich bevorzugt um einen O-Ring handelt. Über das Dichtungselement wird dabei der Bereich zwischen dem zylindrischen Führungsabschnitt und dem umliegenden Gehäuse radial abgedichtet.

Alternativ oder ergänzend ist es zudem eine Weiterbildung der vorgenannten Ausführungsform, dass der zylindrischen Führungsabschnitt aus dem Gehäuse herausgeführt ist, wobei an dem zylindrischen Führungsabschnitt dabei ein Verschlussdeckel befestigt ist. Besonders bevorzugt ist der Verschlussdeckel dabei mit einem konischen Abschnitt in eine hierzu korrespondierende, konische Ausnehmung des zylindrischen Führungsabschnitts hineingeführt, so dass eine Pressverbindung zwischen dem Verschlussdeckel und dem Führungsabschnitt realisiert wird. Alternativ oder ergänzend dazu erfolgt eine Sicherung des Sperrkörper an dem Gehäuse über einen Sicherungsring, welcher in einer Nut des Führungsabschnitts eingelegt ist. Dieser Sicherungsring kann dabei ebenfalls aus einem Kunststoffmaterial hergestellt sein.

Mindestens ein erfindungsgemäßer Absperrhahn ist zudem Teil einer Verteilereinrichtung, welche für den Einsatz im Sanitärbereich konzipiert ist. Dabei geht bevorzugt einer der Kanäle im Gehäuse des Absperrhahns in ein hierzu quer verlaufendes Verbindungsrohr über, über welches eine Verbindung zu weiteren Anschlüssen der Verteilereinrichtung hergestellt ist. Dabei sind dann ggf. zwischen diesen weiteren Anschlüssen und dem Verbindungsrohr weitere Absperrhähne vorgesehen. Besonders bevorzugt ist die komplette Verteilereinrichtung dabei als vollsynthetische Verteilereinrichtung aus Kunststoff hergestellt, wobei das Gehäuse des mindestens einen Absperrhahnes dabei einstückig mit weiteren Teilen der Verteilereinrichtung ausgestaltet sein kann.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale auch soweit sie aus den Ansprüchen, der nachfolgenden Beschreibung einer bevorzugten Ausführungsform der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Eine vorteilhafte Ausführungsform der Erfindung, die nachfolgend erläutert wird, ist in den Zeichnungen dargestellt. Es zeigt:
- Fig. 1: eine perspektivische Ansicht einer Verteilereinrichtung entsprechend einer Ausführungsform der Erfindung;
- Fig. 2: eine weitere perspektivische Ansicht eines Teils der Verteilereinrichtung aus Fig. 1, wobei ein gemäß einer bevorzugten Ausgestaltungsmöglichkeit der Erfindung ausgebildeter Absperrhahn der Verteilereinrichtung in Explosionsdarstellung gezeigt ist;
- Fig. 3: eine Schnittansicht der Verteilereinrichtung aus Fig. 1 im Bereich des Absperrhahns, gezeigt in einer ersten Stellung;
- Fig. 4: eine weitere Schnittansicht der Verteilereinrichtung aus Fig. 1 im Bereich des Absperrhahns, gezeigt in einer zweiten Stellung;
- Fig. 5: eine Schnittansicht eines Sperrkörpers des Absperrhahns;
- Fig. 6: eine perspektivische Einzelansicht des Sperrkörpers aus Fig. 5;
- Fig. 7: eine perspektivische Einzelansicht eines Dichtelements des Absperrhahns;
- Fig. 8: eine Schnittansicht des Dichtelements aus Fig. 7; und
- Fig. 9: eine perspektivische Ansicht eines Gehäuses des Absperrhahns.

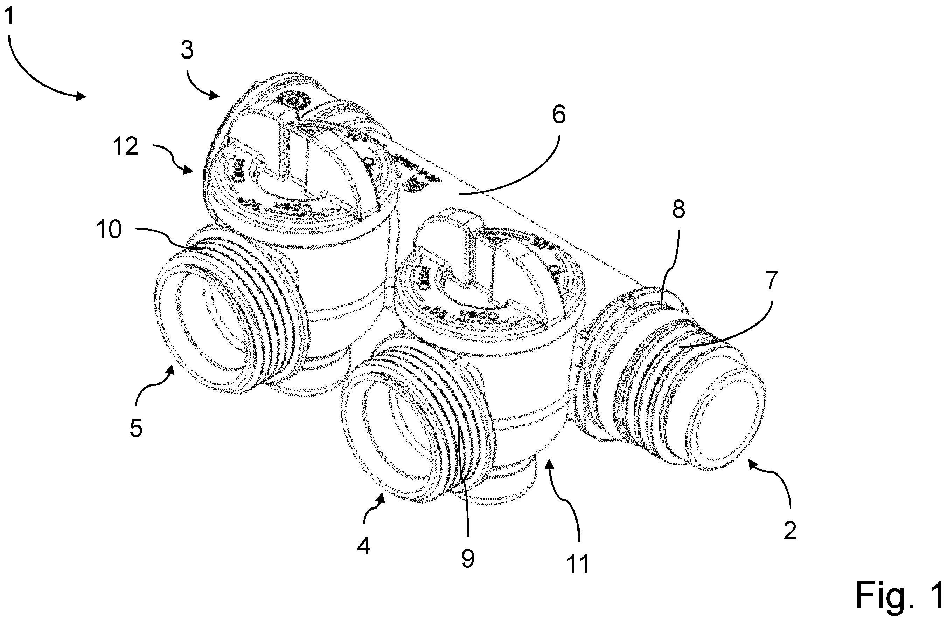

Fig. 1 zeigt eine perspektivische Ansicht einer Verteilereinrichtung 1, die für den Einsatz im Sanitärbereich konzipiert und entsprechend einer bevorzugten Ausführungsform der Erfindung ausgebildet ist. Dabei ist diese Verteilereinrichtung 1 vollsynthetisch ausgestaltet, indem alle Komponenten der Verteilereinrichtung 1 aus Kunststoffmaterialien bestehen. Vorliegend weist die Verteilereinrichtung 1 vier Anschlüsse 2, 3, 4 und 5 auf, von welchen die Anschlüsse 2 und 3 über ein Verbindungsrohr 6 der Verteilereinrichtung 1 permanent miteinander verbunden sind und jeweils entweder dem Anschluss je einer weiteren Verteilereinrichtung oder je einem Rohr dienen. Zu diesem Zweck ist der Anschluss 2 mit einem Außengewinde 7 versehen, auf welchem die weitere Verteilereinrichtung bzw. das hieran zu befestigende Rohr über ein Außengewinde aufgeschraubt werden kann. Zur Abdichtung ist an dem Anschluss 2 zudem ein Dichtelement 8 in Form eines O-Ringes vorgesehen.

Der Anschluss 3 verfügt über ein - vorliegend nicht zu sehendes - Innengewinde, an welchem eine an dem Anschluss 3 anzubindende, weitere Verteilereinrichtung bzw. ein an dem Anschluss 3 zu befestigendes Rohr über ein korrespondierendes Außengewinde befestigt werden kann.

Auch die Anschlüsse 4 und 5 sind jeweils mit je einem Außengewinde 9 bzw. 10 versehen, über welche an dem einzelnen Anschluss 4 bzw. 5 je ein Rohr über eine Schraubverbindung befestigt werden kann. Zwischen dem einzelnen Anschluss 4 bzw. 5 und dem Verbindungsrohr 6 und damit auch den beiden Anschlüssen 2 und 3 ist jeweils je ein Absperrhahn 11 bzw. 12 vorgesehen, über welchen der jeweilige Anschluss 2 bzw. 3 mit dem Verbindungsrohr 6 entweder zum Austausch von Fluid in Verbindung gebracht oder von diesem getrennt werden kann. Die Absperrhähne 11 und 12 der Verteilereinrichtung 1 sind dabei jeweils entsprechend einer bevorzugten Ausgestaltungsmöglichkeit der Erfindung ausgebildet, wobei diese im Folgenden nun anhand des Absperrhahns 11 näher beschrieben werden sollen, welcher baugleich zu dem Absperrhahn 12 ausgeführt ist.

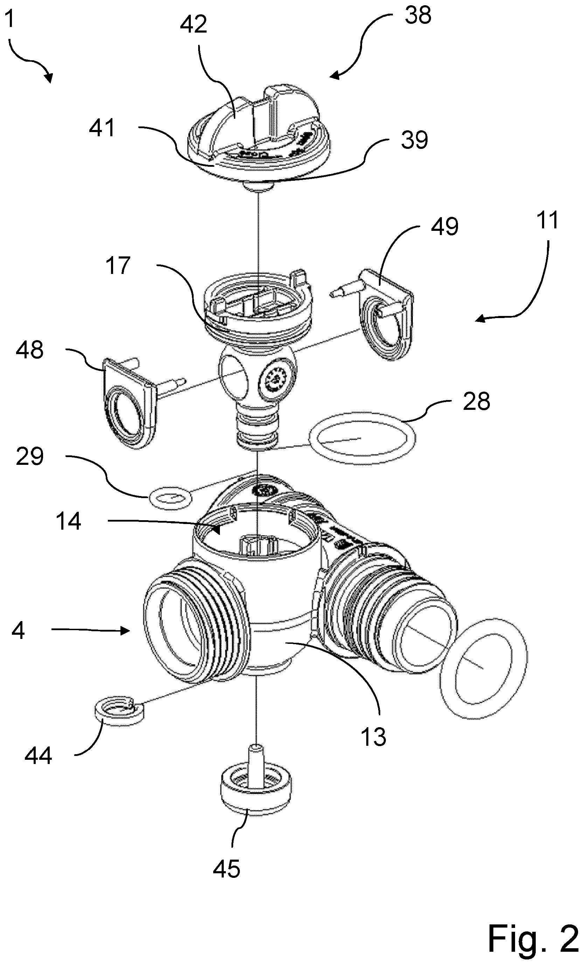

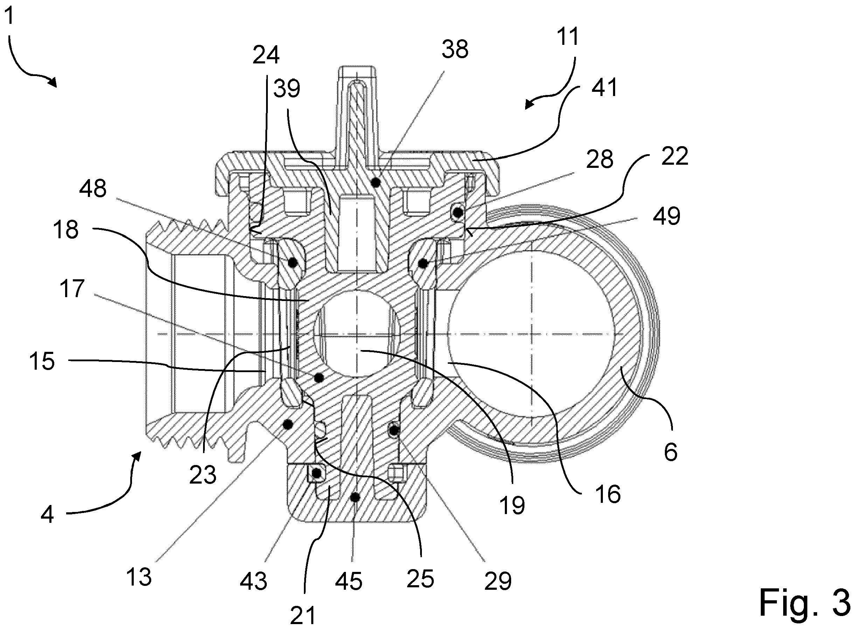

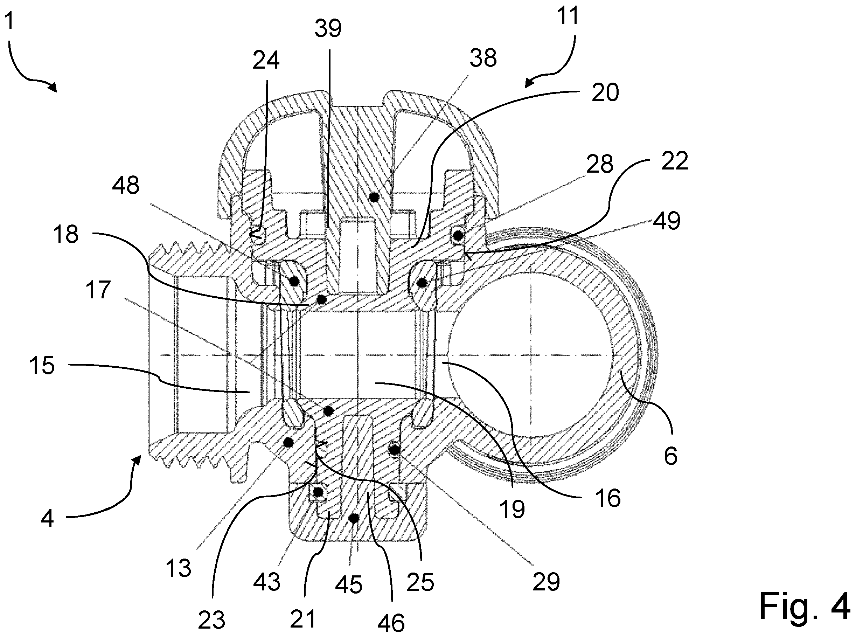

In Fig. 2 ist die Verteilereinrichtung 1 perspektivisch im Bereich des Absperrhahns 11 dargestellt, wobei der Absperrhahn 11 dabei in Explosionsdarstellung gezeigt ist. Zudem sind in den Fig. 3 und 4 Schnittansichten der Verteilereinrichtung 1 im Bereich des Absperrhahns 11 in unterschiedlichen Stellungen dargestellt. Wie in den Fig. 2 bis 4 jeweils zu erkennen ist, umfasst der Absperrhahn 11 dabei ein Gehäuse 13, welches einstückig mit dem Verbindungsrohr 6 und auch dem zugehörigen Anschluss 4 ausgestaltet ist und aus einem Kunststoffmaterial besteht, bei welchem es sich bevorzugt um einen thermoplastischen Kunststoff wie Polyvinylidenfluorid (PVDF) oder Polyphenylensulfon (PPSU) handelt. Dieses Gehäuse 13 weist einen Innenbereich 14 und zwei Kanäle 15 und 16 auf, wobei die beiden Kanäle 15 und 16 dabei koaxial zueinander liegen und jeweils in dem Innenbereich 14 münden. Der Innenbereich ist dabei durch eine gestufte Ausnehmung definiert, mit welcher das Gehäuse quer zu den Kanälen 15 und 16 vollständig durchsetzt ist. Dabei dienen die beiden Kanäle 15 und 16 jeweils einer Leitung von Fluid, wobei über den Kanal 15 dabei eine Verbindung zu dem Anschluss 4 hergestellt ist, während der Kanal 16 neben dem Innenbereich 14 noch in dem Verbindungsrohr 6 mündet, so dass bei einer Verbindung der Kanäle 15 und 16 auch ein Strömen von Fluid zwischen dem Anschluss 4 und dem Verbindungsrohr 6 ermöglicht wird.

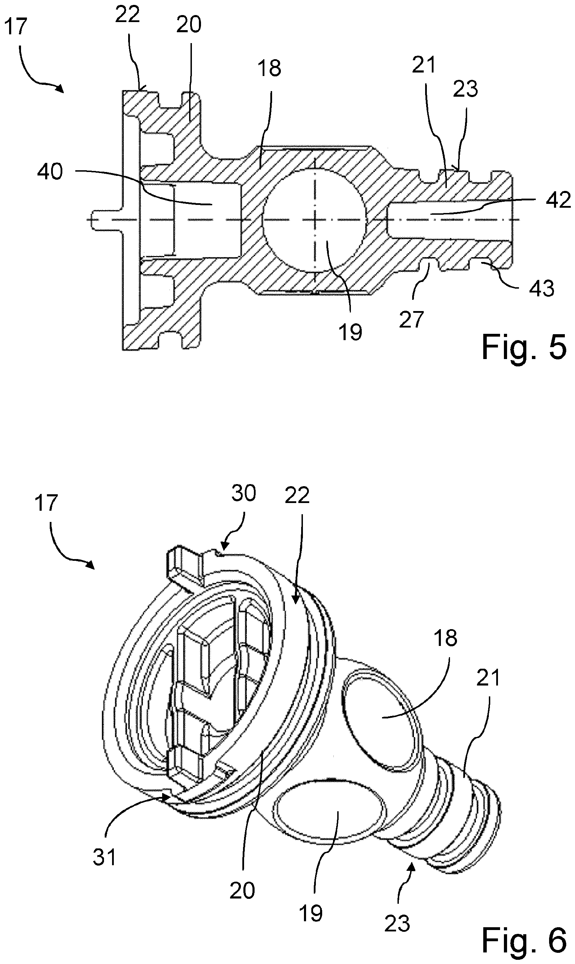

In dem Innenbereich 14 des Gehäuses 13 ist zudem ein Sperrkörper 17 platziert, welcher in dem Gehäuse 13 unmittelbar verdrehbar gelagert ist und in den Fig. 5 und 6 einzeln dargestellt ist. Dieser Sperrkörper 17 besteht dabei ebenfalls aus einem Kunststoffmaterial, bei welchem es sich bevorzugt um einen thermoplastischen Kunststoff und hierbei weiter bevorzugt um Polyphenylensulfon (PPSU) handelt. Dabei verfügt der Sperrkörper 17 über einen Sperrabschnitt 18, welcher eine sphärische Form aufweist, die einer mit Abflachungen versehenen Kugel nachempfunden ist. Der Sperrabschnitt 18 ist mit einer Durchgangsöffnung 19 versehen, die als Durchgangsbohrung mit kreisrundem Querschnitt vorliegt. In einer Öffnungsstellung des Sperrkörpers 17 im Gehäuse 13, welche in Fig. 4 zu sehen ist, überdeckt die Durchgangsöffnung 19 mit den beiden Kanälen 15 und 16 und verbindet diese hierdurch miteinander, so dass zwischen den Kanälen 15 und 16 und damit auch zwischen dem Anschluss 4 und dem Verbindungsrohr 6 Fluid strömen kann. Hingegen sind die Kanäle 15 und 16 in einer Schließstellung des Sperrkörpers 17, welche in Fig. 3 zu sehen ist, über den Sperrkörper 17 voneinander getrennt, wodurch ein Strömen von Fluid zwischen den Kanälen 15 und 16 unterbunden ist.

Der Sperrkörper 17 bildet zudem auf der einen Seite des Sperrabschnitts 18 einen Stellabschnitt 20 sowie auf der hierzu entgegengesetzten Seite einen Führungsabschnitt 21. Wie insbesondere in den Fig. 5 und 6 zu sehen ist, sind sowohl der Stellabschnitt 20, als auch der Führungsabschnitt 21 dabei im Wesentlichen zylinderförmig ausgestaltet, wobei beide Abschnitte 20 und 21 der unmittelbaren drehbaren Lagerung des Sperrkörpers 17 im umliegenden Gehäuse 13 dienen. Dazu ist sowohl an einem Außenumfang 22 des Stellabschnitt 20, als auch an einem Außenumfang 23 des Führungsabschnitts 21 eine Führung an je einem zugehörigen Innenumfang 24 bzw. 25 des Gehäuses realisiert. Außerdem ist sowohl in dem Stellabschnitt 20, als auch in dem Führungsabschnitt 21 jeweils je eine umlaufende Nut 26 bzw. 27 ausgebildet, in der jeweils je ein Dichtelement 28 bzw. 29 in Form je eines O-Ringes aufgenommen ist. Das einzelne Dichtelement 28 bzw. 29 dient dabei einer jeweiligen Abdichtung eines jeweiligen Spalts wischen dem Gehäuse 13 und dem Stellabschnitt 20 bzw. dem Führungsabschnitt 21.

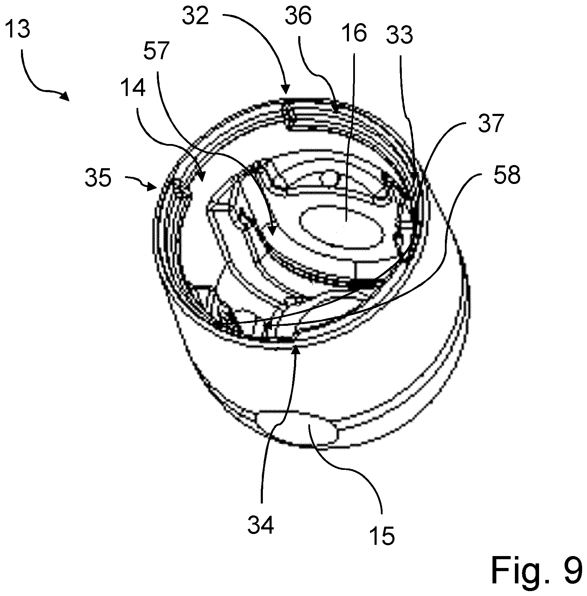

Wie insbesondere in Fig. 6 zu erkennen ist, ist der Sperrkörper 17 an dem Stellabschnitt 20 mit radial gegenüber dem Außenumfang 22 vorstehenden Anschlägen 30 und 31 ausgestattet, die jeweils sowohl in der Öffnungsstellung, als auch in der Schließstellung des Sperrkörpers 17 in Umfangsrichtung mit je einem Endanschlag 32 oder 33 bzw. 34 oder 35 in Kontakt gelangt. Die Endanschläge 32, 33, 34 und 35, welche insbesondere in der Einzelansicht eines Teils des Gehäuses 13 in Fig. 9 zu sehen sind, sind seitens des Gehäuses 17 durch radiale Vertiefungen 36 und 37 definiert, die sich in Umfangsrichtung jeweils über ungefähr 90° erstrecken. Dabei begrenzt der Anschlag 30 im Zusammenspiel mit dem Endanschlag 32 und der Anschlag 31 in Zusammenspiel mit dem Endanschlag 34 eine Verdrehung des Sperrkörpers 17 in die eine Drehrichtung relativ zum Gehäuse 13 und definiert die Positionierung des Sperrkörpers 17 in der Öffnungsstellung, wohingegen der Anschlag 30 im Zusammenspiel mit dem Endanschlag 33 und der Anschlag 31 in Zusammenspiel mit dem Endanschlag 35 eine Verdrehung des Sperrkörpers 17 in die jeweils andere Drehrichtung relativ zum Gehäuse 13 begrenzt und die Positionierung des Sperrkörpers 17 in der Schließstellung definiert.

Zur Einleitung einer Relativverdrehung des Sperrkörpers 17 zum Gehäuse 13 ist der Sperrkörper 17 an dem Stellabschnitt 20 mit einer Krafteinleitungseinrichtung 38 verbunden, die aus einem thermoplastischen Kunststoff besteht, wobei es sich bei diesem dabei bevorzugt um Polypropylen (PP) handelt. Dabei ist die Krafteinleitungseinrichtung 38 an einem Dorn 39 in Drehrichtung formschlüssig mit dem Stellabschnitt 20 verbunden, wobei der Dorn 39 dabei in eine Ausnehmung 40 einragt, die seitens des Stellabschnitts 20 des Sperrkörpers 17 ausgebildet ist. Über den Dorn 39 wird dabei ein Verdrehen der Krafteinleitungseinrichtung 38 in eine ebenso große Verdrehung des Sperrkörpers 17 umgesetzt. Die Krafteinleitungseinrichtung 38 ist einem Drehknopf nachempfunden und weist dabei einen im wesentlichen Deckelförmigen Körper 41 auf, an welchem neben dem Dorn 39 auch noch eine rippenartiger Aufbau 42 vorgesehen ist. Der rippenartige Aufbau 42 steht dabei gegenüber dem Körper 41 auf einer dem Dorn 39 abgewandt liegenden Seite vor und dient der Einleitung einer Kraft zum Verdrehen der Krafteinleitungseinrichtung 38 per Hand oder mittels eines Werkzeuges.

Wie zudem insbesondere in den Fig. 3 und 4 zu erkennen ist, ist der Führungsabschnitt 21 des Sperrkörpers 17 aus dem Gehäuse 13 mit einem Ende herausgeführt, wobei an dem herausgeführten Ende in einer weiteren Nut 43 des Führungsabschnitts 21 ein Sprengring 44 einfasst, über welchen der Sperrkörper 17 an einem Herauswandern aus dem Innenbereich 14 des Gehäuses 13 gehindert wird. Außerdem ist an dem herausgeführten Ende des Führungsabschnitts 21 noch ein Verschlussdeckel 45 befestigt welcher dabei mit einem vorstehenden, konischen Dorn 46 in eine Ausnehmung 47 des Führungsabschnitts 21 eingepresst ist.

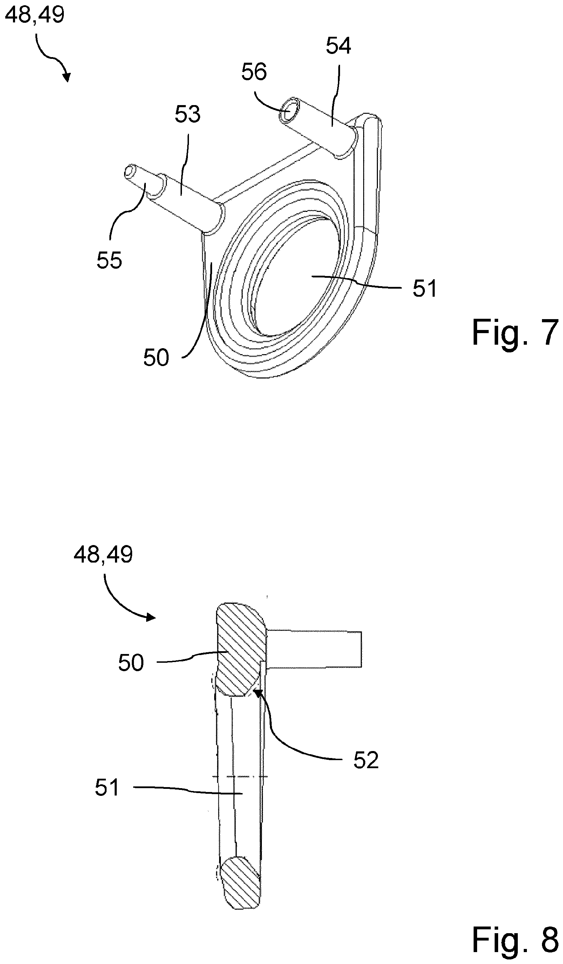

Zur Abdichtung der Mündungen der Kanäle 15 und 16 in den Innenbereich 14 des Gehäuses 13 gegenüber einem jeweiligen, zwischen dem Gehäuse 13 und dem Sperrkörper 17 vorhandenen Spalt sind zudem zwei Dichtelemente 48 und 49 vorgesehen, die in den Fig. 7 und 8 als Einzelteil dargestellt sind. Das einzelne Dichtelement 48 bzw. 49 besteht dabei aus einem thermoplastischen Kunststoff, bei welchem es sich bevorzugt um Polyvinylidenfluorid (PVDF) handelt. Dabei weist das einzelne Dichtelement 48 bzw. 49 einen scheibenförmigen Dichtkörper 50 auf, welcher mit einem Durchgang 51 durchsetzt ist, wobei das einzelne Dichtelement 48 bzw. 49 im montierten Zustand dabei mit dem Durchgang 51 mit dem je zugehörigen Kanal 15 bzw. 16 fluchtet. Auf einer dem Sperrkörper 17 im verbauten Zustand zugewandten Seite weist der einzelne Durchgang 51 dabei eine zu der sphärischen Form des Sperrabschnitt 18 korrespondierende Einwölbung 52 auf, die insbesondere in Fig. 8 zu erkennen ist.

An dem jeweiligen Dichtkörper 50 des einzelnen Dichtelements 48 bzw. 49 sind zudem jeweils zwei vorstehende Stege 53 und 54 ausgebildet, die im verbauten Zustand des einzelnen Dichtelements 48 bzw. 49 in Richtung des jeweils anderen Dichtelements 49 bzw. 48 vorstehen. Von diesen Stege 53 und 54 ist der eine Steg 53 dabei mit einem vorstehenden Stift 55 versehen, während der andere Steg 54 eine zu dem Stift 55 korrespondierende Ausnehmung 56 aufweist.

Die Dichtelemente 48 und 49 sind seitens des Gehäuses 13 in zugehörige Aussparungen 57 eingelegt, von denen in Fig. 9 nur eine Aussparung 57 zu sehen ist. Über die jeweilige Aussparung 57 wird dabei sichergestellt, dass das zugehörige Dichtelement 48 bzw. 49 mit seinem jeweiligen Durchgang 51 fluchtend zu dem zugehörigen Kanal 15 bzw. 16 verbleibt. Zusätzlich stützen sich die beiden Dichtelemente 48 und 49 dabei aneinander ab, indem der vorstehende Steg 53 des einen Dichtelements 48 mit seinem Stift 55 in die Aussparung 56 des Stegs 54 des anderen Dichtelements 49 und umgekehrt einfasst.

Mittels der erfindungsgemäßen Ausführung kann ein Sperrhahn und im Weiteren auch ein Verteilereinrichtung mit niedrigem Herstellungsaufwand vollsynthetisch realisiert werden.

### Bezugszeichenliste

- 1: Verteilereinrichtung
- 2: Anschluss
- 3: Anschluss
- 4: Anschluss
- 5: Anschluss
- 6: Verbindungsrohr
- 7: Außengewinde
- 8: Dichtelement
- 9: Außengewinde
- 10: Außengewinde
- 11: Absperrhahn
- 12: Absperrhahn
- 13: Gehäuse
- 14: Innenbereich
- 15: Kanal
- 16: Kanal
- 17: Sperrkörper
- 18: Sperrabschnitt
- 19: Durchgangsöffnung
- 20: Stellabschnitt
- 21: Führungsabschnitt
- 22: Außenumfang
- 23: Außenumfang
- 24: Innenumfang
- 25: Innenumfang
- 26: Nut
- 27: Nut
- 28: Dichtelement
- 29: Dichtelement
- 30: Anschlag
- 31: Anschlag
- 32: Endanschlag
- 33: Endanschlag
- 34: Endanschlag
- 35: Endanschlag
- 36: Vertiefung
- 37: Vertiefung
- 38: Krafteinleitungseinrichtung
- 39: Dorn
- 40: Ausnehmung
- 41: Körper
- 42: Aufbau
- 43: Nut
- 44: Sprengring
- 45: Verschlussdeckel
- 46: Dorn
- 47: Ausnehmung
- 48: Dichtelement
- 49: Dichtelement
- 50: Dichtkörper
- 51: Durchgang
- 52: Einwölbung
- 53: Steg
- 54: Steg
- 55: Stift
- 56: Ausnehmung
- 57: Aussparung

## Patentansprüche

1. Absperrhahn (12), insbesondere für einen Einsatz im Sanitärbereich, umfassend ein einstückiges Gehäuse (13) aus einem Kunststoffmaterial, welches einen Innenbereich (14) und Kanäle (15, 16) definiert, die jeweils einer Leitung von Fluid dienen und in dem Innenbereich (14) des Gehäuses (13) münden, wobei ein Sperrkörper (17) aus einem Kunststoffmaterial vorgesehen ist, welcher in dem Innenbereich (14) des Gehäuses (13) aufgenommen und relativ zu dem Gehäuse (13) zwischen einer Öffnungsstellung und einer Schließstellung verdrehbar ist, wobei eine Durchgangsöffnung (19) im Sperrkörper (17) in der Öffnungsstellung mit den Kanälen (15, 16) des Gehäuses (13) überdeckt und hierdurch eine Verbindung zwischen den Kanälen (15, 16) herstellt, und wobei Dichtelemente (48, 49) aus einem Kunststoffmaterial vorgesehen sind, die jeweils mit je einem Durchgang (51) ausgestattet sind und dabei jeweils mit dem jeweiligen Durchgang (51) fluchtend mit jeweils einem der Kanäle (15, 16) platziert sind, wobei der Sperrkörper (17) in dem Gehäuse (13) unmittelbar verdrehbar gelagert ist, und dass das einzelne Dichtelement (48, 49) jeweils die Mündung des zugehörigen Kanals (15, 16) in den Innenbereich (14) gegenüber einem Spalt abdichtet, welcher zwischen dem Gehäuse (13) und dem Sperrkörper (17) gebildet ist, **dadurch gekennzeichnet, dass** die Dichtelemente (48, 49) jeweils je einen scheibenförmigen Dichtkörper (50) aufweisen, welcher mit dem jeweiligen Durchgang (51) durchsetzt ist, dass an dem jeweiligen Dichtkörper (50) des einzelnen Dichtelements (48, 49) zudem jeweils zwei vorstehende Stege (53, 54) ausgebildet sind, die in Richtung des jeweils anderen Dichtelements (49; 48) vorstehen, dass von diesen Stegen (53, 54) der eine Steg (53) dabei mit einem vorstehenden Stift (55) versehen ist, während der andere Steg (54) eine zu dem Stift (55) korrespondierende Ausnehmung (56) aufweist, und dass einander gegenüberliegende Stege (53, 54) der Dichtelemente (48, 49) jeweils paarweise eine Verbindung zwischen den Dichtelementen (48, 49) herstellen, indem der vorstehende Steg (53) des einen Dichtelements (48) mit seinem Stift (55) in die Aussparung (56) des Stegs (54) des anderen Dichtelements (49) und umgekehrt einfasst.

2. Absperrhahn (12) nach Anspruch 1, **dadurch gekennzeichnet, dass** das einzelne Dichtelement (48, 49) in je eine Aussparung (57) eingelegt ist, die jeweils in dem Gehäuse (13) an der Mündung des jeweiligen Kanals (15, 16) in den Innenbereich (14) ausgebildet ist.

3. Absperrhahn (12) nach Anspruch 1 oder 2, **dadurch gekennzeichnet, dass** der Sperrkörper (17) zumindest abschnittsweise eine zumindest teilweise sphärische Form aufweist.

4. Absperrhahn (12) nach Anspruch 3, **dadurch gekennzeichnet, dass** die Durchgänge (51) der Dichtelemente (48, 49) jeweils auf Seiten des Sperrkörpers (17) eine zu der zumindest teilweisen sphärischen Form des Sperrkörpers (17) korrespondierende Einwölbung (52) aufweisen.

5. Absperrhahn (12) nach einem der vorhergehenden Ansprüche, **dadurch gekennzeichnet, dass** der Sperrkörper (17) einen Stellabschnitt (20) ausbildet, über welchen eine Verdrehbewegung des Sperrkörpers (17) zwischen der Öffnungs- und der Schließstellung einleitbar ist.

6. Absperrhahn (12) nach Anspruch 5, **dadurch gekennzeichnet, dass** der Stellabschnitt (20) mit mindestens einem Anschlag (30, 31) versehen ist, welcher in Drehrichtung in der Öffnungsstellung und/oder in der Schließstellung des Sperrkörpers (17) mit je einem Endanschlag (32, 33; 34, 35) in Kontakt gelangt, welcher seitens des Gehäuses (13) ausgebildet ist.

7. Absperrhahn (12) nach Anspruch 5 oder 6, **dadurch gekennzeichnet, dass** der Stellabschnitt (20) mit einer Krafteinleitungseinrichtung (38) verbunden ist, über welche die Verdrehbewegung einleitbar ist.

8. Absperrhahn (12) nach einem der vorhergehenden Ansprüche, **dadurch gekennzeichnet, dass** der Sperrkörper (17) einen zylindrischen Führungsabschnitt (21) ausbildet, welcher mit einem Außenumfang (23) an einem Innenumfang (25) einer Ausnehmung im Gehäuse (17) geführt ist.

9. Verteilereinrichtung (1), insbesondere für den Sanitärbereich, umfassend mindestens ein Absperrhahn (12) nach einem oder mehreren der Ansprüche 1 bis 8.

## Claims

1. Shut-off valve (12), in particular for use in the sanitary sector, comprising a one-piece housing (13) composed of a plastics material which defines an inner region (14) and channels (15, 16) which each serve to conduct fluid and each lead into the inner region (14) of the housing (13), wherein a blocking body (17) composed of a plastics material is provided, said blocking body being received in the inner region (14) of the housing (13) and being rotatable relative to the housing (13) between an opening position and a closing position, wherein a passage opening (19) in the blocking body (17) overlaps the channels (15, 16) of the housing (13) in the opening position and thus establishes a connection between the channels (15, 16), and wherein sealing elements (48, 49) composed of a plastics material are provided, said sealing elements each being equipped with a respective passage (51) and each being placed with the respective passage (51) aligned with a respective one of the channels (15, 16), wherein the blocking body (17) is directly rotatably mounted in the housing (13), and in that the individual sealing element (48, 49) in each case provides sealing for the mouth of the associated channel (15, 16) into the inner region (14) in relation to a gap which is formed between the housing (13) and the blocking body (17), **characterized in that** the sealing elements (48, 49) each have a respective disc-like sealing body (50) which is passed through by the respective passage (51), **in that** in each case two protruding webs (53, 54) are additionally formed on the respective sealing body (50) of the individual sealing element (48, 49) and protrude in the direction of the respectively other sealing element (49; 48), **in that**, of these webs (53, 54), the one web (53) is provided with a protruding pin (55), whilst the other web (54) has a recess (56) corresponding to the pin (55), and **in that** mutually opposite webs (53, 54) of the sealing elements (48, 49) establish, in each case in pairs, a connection between the sealing elements (48, 49) by virtue of the pin (55) of the protruding web (53) of the one sealing element (48) engaging with the cutout (56) in the web (54) of the other sealing element (49) and vice versa.

2. Shut-off valve (12) according to Claim 1, **characterized in that** the individual sealing element (48, 49) is inserted into a respective cutout (57) formed in each case in the housing (13) at the mouth of the respective channel (15, 16) into the inner region (14).

3. Shut-off valve (12) according to Claim 1 or 2, **characterized in that** the blocking body (17) has an at least partially spherical shape at least in certain portions.

4. Shut-off valve (12) according to Claim 3, **characterized in that** the passages (51) of the sealing elements (48, 49) each have, on the side of the blocking body (17), an indentation (52) corresponding to the at least partially spherical shape of the blocking body (17) .

5. Shut-off valve (12) according to one of the preceding claims, **characterized in that** the blocking body (17) forms an actuating portion (20) which can be used to initiate a rotational movement of the blocking body (17) between the opening position and the closing position.

6. Shut-off valve (12) according to Claim 5, **characterized in that** the actuating portion (20) is provided with at least one stop (30, 31) which in the direction of rotation in the opening position and/or in the closing position of the blocking body (17) comes into contact with a respective end stop (32, 33; 34, 35) formed on the housing (13).

7. Shut-off valve (12) according to Claim 5 or 6, **characterized in that** the actuating portion (20) is connected to a force introduction device (38) which can be used to initiate the rotational movement.

8. Shut-off valve (12) according to one of the preceding claims, **characterized in that** the blocking body (17) forms a cylindrical guide portion (21) which is guided with an outer periphery (23) on an inner periphery (25) of a recess in the housing (17).

9. Distributor device (1), in particular for the sanitary sector, comprising at least one shut-off valve (12) according to one or more of Claims 1 to 8.

## Revendications

1. Robinet d'arrêt (12), notamment pour une utilisation dans le domaine sanitaire, comprenant un boîtier (13) d'une seule pièce en une matière plastique, qui définit une zone intérieure (14) et des canaux (15, 16), qui servent chacun à une conduite de fluide et qui débouchent dans la zone intérieure (14) du boîtier (13), un corps de blocage (17) en une matière plastique étant prévu, qui est reçu dans la zone intérieure (14) du boîtier (13) et peut tourner par rapport au boîtier (13) entre une position d'ouverture et une position de fermeture, une ouverture de passage (19) dans le corps de blocage (17) coïncidant, dans la position d'ouverture, avec les canaux (15, 16) du boîtier (13) et établissant ainsi une liaison entre les canaux (15, 16), et des éléments d'étanchéité (48, 49) en une matière plastique étant prévus, qui sont équipés chacun d'un passage (51) et sont placés chacun avec le passage respectif (51) en alignement avec l'un respectif des canaux (15, 16), le corps de blocage (17) étant logé dans le boîtier (13) de manière à pouvoir tourner directement, et en ce que l'élément d'étanchéité individuel (48, 49) étanchéifie respectivement l'embouchure du canal correspondant (15, 16) dans la zone intérieure (14) par rapport à une fente, qui est formée entre le boîtier (13) et le corps de blocage (17), **caractérisé en ce que** les éléments d'étanchéité (48, 49) présentent chacun un corps d'étanchéité (50) en forme de disque qui est traversé par le passage respectif (51), **en ce que** sur le corps d'étanchéité respectif (50) de l'élément d'étanchéité individuel (48, 49) sont réalisées en outre deux nervures en saillie (53, 54) qui sont en saillie en direction de l'autre élément d'étanchéité respectif (49 ; 48), **en ce que**, parmi ces nervures (53, 54), l'une des nervures (53) est pourvue d'une tige en saillie (55), tandis que l'autre nervure (54) présente un évidement (56) correspondant à la tige (55), et **en ce que** des nervures (53, 54) opposées l'une à l'autre des éléments d'étanchéité (48, 49) établissent respectivement par paires une liaison entre les éléments d'étanchéité (48, 49), par le fait que la nervure en saillie (53) de l'un des éléments d'étanchéité (48) s'insère avec sa tige (55) dans l'évidement (56) de la nervure (54) de l'autre élément d'étanchéité (49) et inversement.

2. Robinet d'arrêt (12) selon la revendication 1, **caractérisé en ce que** l'élément d'étanchéité individuel (48, 49) est introduit dans un évidement (57) respectif réalisé dans le boîtier (13) à l'embouchure du canal respectif (15, 16) dans la zone intérieure (14).

3. Robinet d'arrêt (12) selon la revendication 1 ou 2, **caractérisé en ce que** le corps de blocage (17) présente au moins par sections une forme au moins partiellement sphérique.

4. Robinet d'arrêt (12) selon la revendication 3, **caractérisé en ce que** les passages (51) des éléments d'étanchéité (48, 49) présentent chacun, sur des côtés du corps de blocage (17), un renflement (52) correspondant à la forme au moins partiellement sphérique du corps de blocage(17).

5. Robinet d'arrêt (12) selon l'une quelconque des revendications précédentes, **caractérisé en ce que** le corps de blocage (17) réalise une section de réglage (20) par l'intermédiaire de laquelle un mouvement de rotation du corps de blocage (17) entre la position d'ouverture et la position de fermeture peut être initié.

6. Robinet d'arrêt (12) selon la revendication 5, **caractérisé en ce que** la section de réglage (20) est pourvue d'au moins une butée (30, 31) qui, dans la direction de rotation dans la position d'ouverture et/ou dans la position de fermeture du corps de blocage (17), vient en contact avec une butée d'extrémité (32, 33 ; 34, 35) qui est réalisée du côté du boîtier (13).

7. Robinet d'arrêt (12) selon la revendication 5 ou 6, **caractérisé en ce que** la section de réglage (20) est reliée à un dispositif d'introduction de force (38), par l'intermédiaire duquel le mouvement de rotation peut être initié.

8. Robinet d'arrêt (12) selon l'une quelconque des revendications précédentes, **caractérisé en ce que** le corps de blocage (17) réalise une section de guidage cylindrique (21) qui est guidée par une périphérie extérieure (23) sur une périphérie intérieure (25) d'un évidement dans le boîtier (17).

9. Dispositif de distribution (1), notamment pour le domaine sanitaire, comprenant au moins un robinet d'arrêt (12) selon une ou plusieurs des revendications 1 à 8.
